# EUROPEAN PATENT APPLICATION

(11) **EP 2 113 363 A1**
(43) Date of publication of application: **04.11.2009**
(21) Application number: 08155105.3
(22) Date of filing: 24.04.2008
(51) Int. Cl.: B29C 47/08, B29C 47/88

(54) **Process for protecting extrudate from process condensation**

(71) Applicant: Tonen Chemical Corporation, Tokyo 108-8005 (JP)
(72) Inventor: The designation of the inventor has not yet been filed
(74) Representative: Veldhuizen, Albert Dirk Willem

(57) **Abstract**

In a system for producing an extrudate of thermoplastic material, the system including an extrusion die (12) having a die outlet that includes a first die lip and a second die lip through which a polymer solution is extruded, and a chill roll for cooling the extrudate, an apparatus for protecting a cooled extrudate. The apparatus includes a plate (20) having a leading edge, a first end and a second end, the plate having a width that increases from the first end to the second end, along the leading edge, and means (22) for attaching the plate adjacent to the first die lip of the extrusion die.

## Description

### FIELD OF THE INVENTION

This disclosure relates generally to an extrusion apparatus for producing an extrudate and to an apparatus and system for protecting same.

### BACKGROUND OF THE INVENTION

Extrusion dies are used in manufacturing processes to make a variety of goods. Some dies, for example, are used to form thin films, sheets or other elongated shapes of plastic material. Techniques have been developed for melt laminating which involves joining two or more diverse materials (e.g., thermoplastic materials) from separate molten layers under pressure within a die to emerge as a single laminated material. Such processes make use of the laminar flow principle which enables two or more molten layers under proper operating conditions to join in a common flow channel without intermixing at the contacting interfaces. These multiple layer extrusion systems have come into use as a convenient way to provide for the formation of multiple layers of similar or dissimilar materials.

Various extrusion dies have been produced to extrude multiple layer films. One general configuration of device utilized a first die section which combined the various layers of materials. The combined materials were then flattened and extruded through a second die section. An example of this type of device is illustrated by U.S. Patent No. 5,316,703, incorporated by reference herein in its entirety. This type of device was limited in effectiveness because of the requirement in thin film production that the multi-layer sheet or web have uniform thickness across the width or transverse direction (TD) of the extruded sheet.

A die assembly can be modular and is typically assembled from a plurality of parts and then set in a die station as an integral device. For example, a die assembly can comprise a first die part and a second die part, which together form the components that allow a fluid to enter the assembly and be properly emitted therefrom. The first die part includes a first lip and the second die part includes a second lip, these lips defining a feed gap therebetween that determines the thickness of the fluid film emitted therefrom.

Center feed extrusion dies are commonly used in today's plastics industry. A flow stream entering the manifold undergoes flow divergence, as a result of which there occurs a division of the stream into substreams that flow in generally opposite directions to both ends of the manifold. Pressure drop occurs as each substream flows from the centerline of the manifold to its respective manifold end.

Typically, center feed extrusion dies have a tear drop-shaped, flat manifold, which may be in a form known as a coat hanger manifold, a fish tail manifold, or a T-type manifold. To overcome the pressure drop and produce a substantially equal flow volume of a stream across the stream width, this type of die may further include a flow pressure-compensating preland channel. Also known is a center feed extrusion die having a two stage, flow pressure-compensating, preland channel. This type of apparatus is exemplified in U.S. Patent No. 4,372,739 to Vetter et al. and U.S. Patent No. 5,256,052 to Cloeren.

A die assembly can have a fixed feed gap or a flexible feed gap. With a fixed feed gap, the lips are not movable relative to each other, so that the thickness of the feed gap will always be the same dimension. With a flexible feed gap, one lip is movable relative to the other lip so as to enable adjustment of the feed gap along the width of the assembly. A flexible feed gap is typically accomplished by assembling the first die part so that it contains a flexible web between its rear portion and its front portion (to which the first lip is attached), as well as means for moving the front portion in localized areas. Movement of the front portion results in the adjustment of the position of the lip relative to the other lip and, thus, the thickness of the feed gap in the relevant localized area.

In flexible feed gap operations, localized adjustments of the feed gap can usually be accomplished with conventional die assembly designs in order to accommodate a particular run. This is typically accomplished by measuring the thickness of a finished plastic sheet or film across its width downstream from the die lips, readjusting one or more of adjustment bolts, re-measuring the thickness of a finished plastic sheet or film, and so on until the film thickness distribution is within acceptable limits.

The production of certain specialty films, such as microporous polyolefin membranes have presented additional requirements in the design of extrusion dies for their production. Microporous polyolefin membranes are useful as separators for primary batteries and secondary batteries such as lithium ion secondary batteries, lithium-polymer secondary batteries, nickel-hydrogen secondary batteries, nickel-cadmium secondary batteries, nickel-zinc secondary batteries, silver-zinc secondary batteries, etc. When the microporous polyolefin membrane is used as a battery separator, particularly as a lithium ion battery separator, the membrane's performance significantly affects the properties, productivity and safety of the battery. Accordingly, the microporous polyolefin membrane should have suitably well-balanced permeability, mechanical properties, dimensional stability, shutdown properties, meltdown properties, etc. The term "well-balanced" means that the optimization of one of these characteristics does not result in a significant degradation in another.

As is known, it is desirable for the batteries to have a relatively low shutdown temperature and a relatively high meltdown temperature for improved battery safety, particularly for batteries exposed to high temperatures under operating conditions. Consistent dimensional properties, such as film thickness, are essential to high performing films. A separator with high mechanical strength is desirable for improved battery assembly and fabrication, and for improved durability. The optimization of material compositions, casting and stretching conditions, heat treatment conditions, etc. have been proposed to improve the properties of microporous polyolefin membranes.

In general, microporous polyolefin membranes consisting essentially of polyethylene (i.e., they contain polyethylene only with no significant presence of other species) have relatively low meltdown temperatures. Accordingly, proposals have been made to provide microporous polyolefin membranes made from mixed resins of polyethylene and polypropylene, and multi-layer, microporous polyolefin membranes having polyethylene layers and polypropylene layers in order to increase meltdown temperature. The use of these mixed resins and the production of multilayer films having layers of differing polyolefins can make the production of films having consistent dimensional properties, such as film thickness, all the more difficult.

When using a wet extrusion process, a solvent is mixed with the thermoplastic material, which may be a polyolefin, to form a solution. During extrusion, heat is added to the system and gaseous fumes formed and emitted to the system's environment. These fumes, which can contain solvent, liquid paraffin, and the like, can condense to form an oil-like substance under the cooler ambient conditions surrounding the extrusion die, particularly in the region of die outlet and the first chill roll. Further condensation can result at or near the first chill roll due to the cooling of the extrudate and the generally cooler ambient conditions in the region surrounding the first chill roll. The oily condensate can cause surface defects in the extrudate if it lands upon extrudate.

JP7-216118A discloses a battery separator formed from a porous film comprising polyethylene and polypropylene as indispensable components and having at least two microporous layers each with different polyethylene content. The polyethylene content is 0 to 20% by weight in one microporous layer, 21 to 60% by weight in the other microporous layer, and 2 to 40% by weight in the overall film. The battery separator has relatively high shutdown-starting temperature and mechanical strength.

WO 2004/089627 discloses a microporous polyolefin membrane made of polyethylene and polypropylene comprising two or more layers, the polypropylene content being more than 50% and 95% or less by mass in at least one surface layer, and the polyethylene content being 50 to 95% by mass in the entire membrane.

WO 2005/113657 discloses a microporous polyolefin membrane having conventional shutdown properties, meltdown properties, dimensional stability and high-temperature strength. The membrane is made using a polyolefin composition comprising (a) composition comprising lower molecular weight polyethylene and higher molecular weight polyethylene, and (b) polypropylene. This microporous polyolefin membrane is produced by a so-called "wet process".

Despite these advances in the art, there remains a need for improved extrusion systems capable of producing high quality microporous polyolefin membranes and other films or sheets.

### SUMMARY OF THE INVENTION

In one aspect, provided for use in a system for producing an extrudate of thermoplastic material, the system including an extrusion die having a die outlet that includes a first die lip and a second die lip through which a polymer solution is extruded, and a chill roll for cooling the extrudate, an apparatus for protecting a cooled extrudate, the apparatus including a plate having a leading edge, a first end and a second end, the plate having a width that increases from the first end to the second end, along the leading edge; and means for attaching the plate adjacent to the first die lip of the extrusion die.

In another aspect, a process for producing an extrudate of thermoplastic material is also provided. The process includes the steps of combining a polyolefin composition and a solvent to prepare a polyolefin solution, and extruding the polyolefin solution through an extrusion die, the extrusion die comprising a slotted die outlet through which a melt stream of the thermoplastic material is extruded, the slotted die outlet comprising a first die lip and a second die lip, cooling the extrudate to form a cooled extrudate, protecting the cooled extrudate from condensate through the use of an apparatus that includes a plate having a leading edge, a first end and a second end, the plate having a width that increases from the first end to the second end, along the leading edge, and means for attaching the plate adjacent to the first die lip of the extrusion die.

In an exemplary form disclosed herein, the apparatus for protecting a cooled extrudate from condensate includes a guide for directing accumulated condensate oil away from the cooled extrudate. The guide may further include an elongated member of a length sufficient to direct accumulated condensate oil to an oil collection device.

In a further exemplary form disclosed herein, the means for attaching the plate adjacent to the first die lip of the extrusion die includes a first bracket fastened to the first end of the plate and a second bracket fastened to the second end of the plate.

In a yet further exemplary form disclosed herein, the means for attaching the plate adjacent to the first die lip of the extrusion die further includes a longitudinal support member, the longitudinal support member fastened to the plate adjacent an edge opposing the leading edge.

In a still yet further exemplary form disclosed herein, the process further includes the steps of exhausting process gases to minimize condensation, and, consistent with a wet orientation process, removing the solvent from the cooled extrudate to form a solvent-removed cooled extrudate, and drying the solvent-removed cooled extrudate to form the microporous membrane.

These and other advantages, features and attributes of the disclosed apparatus and system and its advantageous applications and/or uses will be apparent from the detailed description that follows, particularly when read in conjunction with the figures appended hereto.

### BRIEF DESCRIPTION OF THE DRAWINGS

FIG. 1 is a perspective view of an apparatus for protecting a cooled extrudate of thermoplastic material, in accordance herewith;

FIG. 2 is another perspective view of the apparatus for protecting a cooled extrudate of thermoplastic material, in accordance herewith; and

FIG. 3 is yet another perspective view of the apparatus for protecting a cooled extrudate of thermoplastic material, which also shows a system for handling extrusion process air, in accordance herewith.

### DETAILED DESCRIPTION OF THE INVENTION

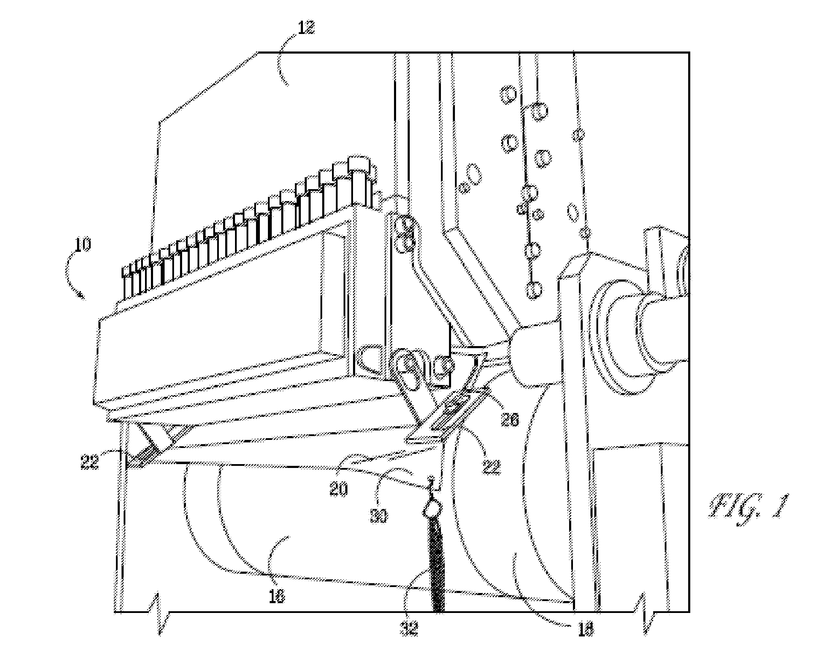

Reference is now made to FIGS. 1-3, wherein like numerals are used to designate like parts throughout.

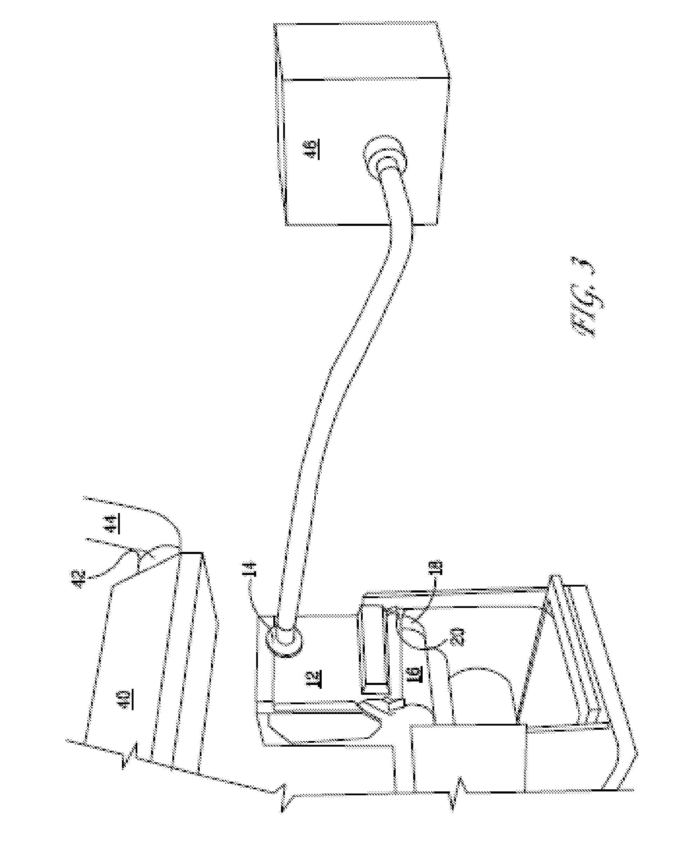

Referring now to FIGS. 1-3, a system 10 for producing an extrudate is shown. System 10 includes an extrusion die 12 having a die outlet (not shown) which includes a first die lip and a second die lip (also not shown), through which a polymer solution is extruded to form an extrudate 16. As shown in FIG.3, the heated melt stream is supplied to extrusion die 12 by heated hose 44, after filtering through filter 46. Extrudate 16 advances to a first chill roll 18 for cooling the extrudate 16 and may pass to a second chill roll 14 and other additional chill rolls (not shown) for further cooling.

As those skilled in the art will understand, when using a wet extrusion process for forming extrudate 16, a solvent is mixed with the thermoplastic material, which may be a polyolefin, to form a solution. During extrusion, heat is added to the system and gaseous fumes formed and emitted to the system's environment. These fumes, which can contain solvent, liquid paraffin, and the like, can condense to form an oil-like substance under the cooler ambient conditions surrounding die 12, particularly in the region of die outlet 14 and first chill roll 18. Further condensation can result at or near first chill roll 18 due to the cooling of extrudate 16 and the generally cooler ambient conditions in the region surrounding first chill roll 18. The oily condensate can cause surface defects in extrudate 16 if it lands upon extrudate 16.

In order to protect the cooled extrudate 16 from condensate oil that may condense and land upon extrudate 16, an apparatus 20 for protecting cooled extrudate 16 is provided. Apparatus 20 includes a plate 50 having a leading edge 52, a first end 54 and a second end 56. As shown, plate 50 has a width w that increases from first end 54 to second end 56, along leading edge 52. Apparatus 20 further includes means 60 for attaching plate 50 to a region adjacent the first die lip of die outlet 14 of extrusion die 12.

As shown by reference to FIGS. 1-3, plate 50 of apparatus 20 may be positioned above chill roll 18 and cooled extrudate 16. When positioned in this manner, extrudate 16 is protected from condensate oil that may condense and land upon extrudate 16.

In one form, apparatus 20 includes a guide 30 for directing accumulated condensate oil away from cooled extrudate 16. In another form, guide 30 may further include an elongated member 32, which may be selected to be of a length sufficient to direct accumulated condensate oil to an oil collection device 36 (see FIG. 3). Elongated member 32 may be a chain, a cord, a hollow tube, or the like and, in the form depicted in FIGS. 1-3, is a chain.

In one form, guide 30 for directing accumulated oil away from the cooled extrudate 16 further includes a downwardly extending portion 38 of plate 20, formed at second end 56. As shown, elongated member 38 may be attached to downwardly extending portion 38 of plate 20.

The means for attaching plate 50 adjacent to the first die lip of die outlet 14 of extrusion die 12 may be selected from any number of conventional means, including brackets extending from the die assembly or chill roll frame, welding directly to a portion of the die assembly frame or the like. In one form, means 60 for attaching plate 50 adjacent to the first die lip of die outlet 14 of extrusion die 12 may include a first bracket 22 fastened to first end 54 of plate 50 and a second bracket 22 fastened to second end 56 of plate 50. Means 60 for attaching plate 50 adjacent to the first die lip of die outlet 14 of extrusion die 12 may further include a longitudinal support member 24, longitudinal support member 24 fastened to plate 50 adjacent an edge 58 opposing leading edge 52. In one form, first bracket 22, second bracket 22 and longitudinal support member 24 are fastened to plate 50 with a plurality of bolts 26. Of course, welding or other fastening means may be utilized in the alternative, as those skilled in the art will plainly understand.

Plate 50 of apparatus 20 may be formed from a variety of materials, so long as the material selected can withstand the extrusion environment, as those skilled in the art will recognize. In one form, plate 50 is a metal plate and may be steel, aluminum or a suitable alloy.

Referring now to FIG. 3, an air handling system 40 for minimizing the impact of gaseous fumes formed and emitted to the extrusion system's environment is shown. As indicated above, these fumes, which can contain solvent, liquid paraffin, and the like, can condense to form an oil-like substance under the cooler ambient conditions surrounding die 12, particularly in the region of die outlet 14 and first chill roll 18. Air handling system 40 advantageously minimizes their impact.

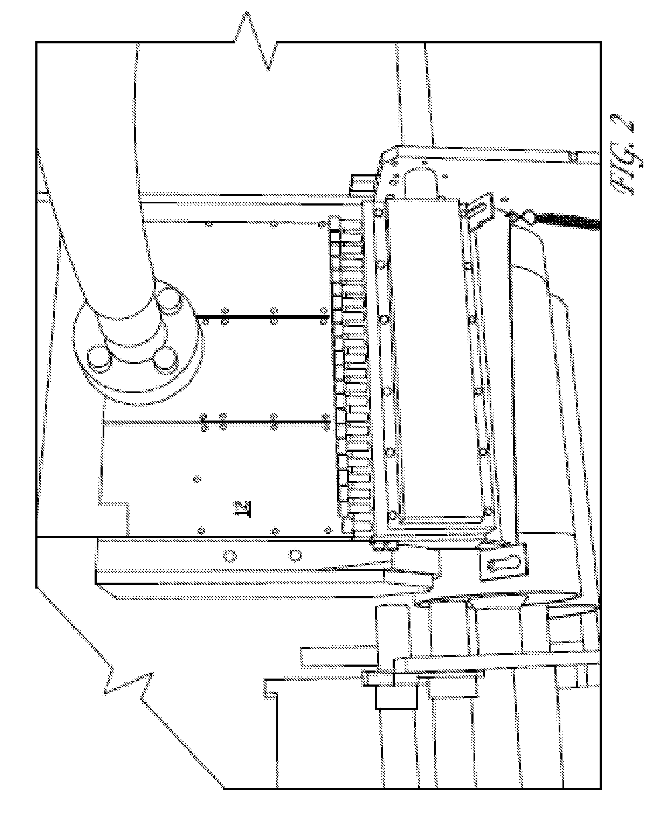

Air handling system 40 provides extrusion die 12 with a means for exhausting fumes generated during extrusion. Gaseous fumes generated by extrusion system 10 are evacuated at exhaust hood 46 and transferred away by exhaust hose 48. Additionally, and, as also shown in FIG. 2, fumes generated by extrusion system 10 are evacuated in the region of the die outlet by one or more exhaust tubes 34. As may be appreciated by those skilled in the art, by exhausting at least a portion of the gaseous fumes generated by extrusion system 10, the potential for generating oily condensate that could be deposited on extrudate 16 may be greatly reduced.

The apparatus and system disclosed herein overcome a difficulty when extruding a polyolefin solution through a die in a variety of processes, including a "wet" microporous polyolefin membrane film or sheet process. These films and sheets have at least one layer, e.g., single layer comprising polyethylene and/ or polypropylene, but the number of layers is not critical. These films and sheets find particular utility in the critical field of battery separators. The multi-layer films described hereinbelow can either be produced using a coextrusion die or be produced using a monolayer die to produce a monolayer film or sheet, with additional layers laminated thereto in a conventional manner.

In one form, the multi-layer, microporous polyolefin membrane comprises two layers. The first layer (e.g., the skin, top or upper layer of the membrane) comprises a first microporous layer material, and the second layer (e.g., the bottom or lower or core layer of the membrane) comprises a second microporous layer material. For example, the membrane can have a planar top layer when viewed from above on an axis approximately perpendicular to the transverse and longitudinal (machine) directions of the membrane, with the bottom planar layer hidden from view by the top layer.

In another form, the multi-layer, microporous polyolefin membrane comprises three or more layers, wherein the outer layers (also called the "surface" or "skin" layers) comprise the first microporous layer material and at least one core or intermediate layer comprises the second microporous layer material. In a related form, where the multi-layer, microporous polyolefin membrane comprises two layers, the first layer consists essentially of the first microporous layer material and the second layer consists essentially of the second microporous layer material. In a related form where the multi-layer, microporous polyolefin membrane comprises three or more layers, the outer layers consist essentially of the first microporous layer material and at least one intermediate layer consists essentially of (or consists of) the second microporous layer material.

Starting materials having utility in the production of the afore-mentioned films and sheets will now be described. As will be appreciated by those skilled in the art, the selection of a starting material is not critical. In one form, the first and second microporous layer materials contain polyethylene. In one form, the first microporous layer material contains a first polyethylene ("PE-1") having an Mw value of less than about 1 x 10⁶ or a second polyethylene ("UHMWPE-1") having an Mw value of at least about 1 x 10⁶. In one form, the first microporous layer material can contain a first polypropylene ("PP-1"). In one form, the first microporous layer material comprises one of (i) a polyethylene (PE), (ii) an ultra high molecular weight polyethylene (UHMWPE), (iii) PE-1 and PP-1, or (iv) PE-1, UHMWPE-1, and PP-1.

In one form of the above (ii) and (iv), UHMWPE-1 can preferably have an Mw in the range of from about 1 x 10⁶ to about 15 x 10⁶ or from about 1 x 10⁶ to about 5 x 10⁶ or from about 1 x 10⁶ to about 3 x 10⁶,and preferably contain greater than about 1 wt.%, or about 15 wt.% to 40 wt.%, on the basis of total amount of PE-1 and UHMWPE-1 in order to obtain a microporous layer having a hybrid structure defined in the later section, and can be at least one of homopolymer or copolymer. In one form of the above (iii) and (iv), PP-1 can be at least one of a homopolymer or copolymer, or can preferably contain no more than about 25 wt.%, on the basis of total amount of the first layer microporous material. In one form, the Mw of polyolefin in the first microporous layer material can have about 1 x 10⁶ or less, or in the range of from about 1 x 10⁵ to about 1 x 10⁶ or from about 2 x 10⁵ to about 1 x 10⁶ in order to obtain a microporous layer having a hybrid structure defined in the later section. In one form, PE-1 can preferably have an Mw ranging from about 1 x 10⁴ to about 5 x 10⁵, or from about 2 x 10⁵ to about 4 x 10⁵, and can be one or more of a high-density polyethylene, a medium-density polyethylene, a branched low-density polyethylene, or a linear low-density polyethylene, and can be at least one of a homopolymer or copolymer.

In one form, the first microporous layer material (the first layer of the two-layer, microporous polyolefin membrane and the first and third layers of a three-layer microporous polyolefin membrane) has a hybrid structure, which is characterized by a pore size distribution exhibiting relatively dense domains having a main peak in a range of 0.01 µm to 0.08 µm and relatively coarse domains exhibiting at least one sub-peak in a range of more than 0.08 µm to 1.5 µm or less in the pore size distribution curve. The ratio of the pore volume of the dense domains (calculated from the main peak) to the pore volume of the coarse domains (calculated from the sub-peak) is not critical, and can range, e.g., from about 0.5 to about 49.

In one form, the second microporous layer material comprises one of: (i) a fourth polyethylene having an Mw of at least about 1 x 10⁶, (UHMWPE-2), (ii) a third polyethylene having an Mw that is less than 1 x 10⁶ and UHMWPE-2 and the fourth polyethylene, wherein the fourth polyethylene is present in an amount of at least about 8% by mass based on the combined mass of the third and fourth polyethylene; (iii) UHMWPE-2 and PP-2, or (iv) PE-2, UHMWPE-2, and PP-2. In one form of the above (ii), (iii) and (iv), UHMWPE-2 can contain at least about 8 wt.%, or at least about 20 wt.%, or at least about 25 wt.%, based on the total amount of UHMWPE-2, PE-2 and PP-2 in order to produce a relatively strong multi-layer, microporous polyolefin membrane. In one form of the above (iii) and (iv), PP-2 can be at least one of a homopolymer or copolymer, and can contain 25 wt.% or less, or in the range of from about 2% to about 15%, or in the range of from about 3% to about 10%, based on the total amount of the second microporous layer material. In one form, preferable PE-2 can be the same as PE-1, but can be selected independently. In one form, preferable UHMWPE-2 can be the same as UHMWPE-1, but can be selected independently.

In addition to the first, second, third, and fourth polyethylenes and the first and second polypropylenes, each of the first and second layer materials can optionally contain one or more additional polyolefins, identified as the seventh polyolefin, which can be, e.g., one or more of polybutene-1, polypentene-1, poly-4-methylpentene-1, polyhexene-1, polyoctene-1, polyvinyl acetate, polymethyl methacrylate, polystyrene and an ethylene α-olefin copolymer (except for an ethylene-propylene copolymer) and can have an Mw in the range of about 1 x 10⁴ to about 4 x 10⁶. In addition to or besides the seventh polyolefin, the first and second microporous layer materials can further comprise a polyethylene wax, e.g., one having an Mw in the range of about 1 x 10³ to about 1 x 10⁴.

In one form, a process for producing a two-layer microporous polyolefin membrane is provided. In another form, the microporous polyolefin membrane has at least three layers. For the sake of brevity, the production of the microporous polyolefin membrane will be mainly described in terms of two-layer and three-layer membrane.

In one form, a three-layer microporous polyolefin membrane comprises first and third microporous layers constituting the outer layers of the microporous polyolefin membrane and a second (core) layer situated between (and optionally in planar contact with) the first and third layers. In another form, the first and third layers are produced from a first polyolefin solution and the second (core) layer is produced from a second polyolefin solution.

In one form, a method for producing the multi-layer, microporous polyolefin membrane is provided. The method comprises the steps of (1) combining (e.g., by melt-blending) a first polyolefin composition and a membrane-forming solvent to prepare a first polyolefin solution, (2) combining a second polyolefin composition and a second membrane-forming solvent to prepare a second polyolefin solution, (3) extruding the first polyolefin solution through a first die and the second solution through a second die and then laminating the extruded first and second polyolefin solutions to form a multi-layer extrudate, (4) cooling the multi-layer extrudate to form a multi-layer, gel-like sheet (cooled extrudate), (5) removing the membrane-forming solvent from the multi-layer, gel-like sheet to form a solvent-removed gel-like sheet, and (6) drying the solvent-removed gel-like sheet in order to form the multi-layer, microporous membrane. An optional stretching step (7), and an optional hot solvent treatment step (8) can be conducted between steps (4) and (5), if desired. After step (6), an optional step (9) of stretching a multi-layer, microporous membrane, an optional heat treatment step (10), an optional cross-linking step with ionizing radiations (11), and an optional hydrophilic treatment step (12), etc., can be conducted.

The first polyolefin composition comprises polyolefin resins as described above that can be combined, e.g., by dry mixing or melt blending with an appropriate membrane-forming solvent to produce the first polyolefin solution. Optionally, the first polyolefin solution can contain various additives such as one or more antioxidant, fine silicate powder (pore-forming material), etc., provided these are used in a concentration range that does not significantly degrade the desired properties of the multi-layer, microporous polyolefin membrane.

The first membrane-forming solvent is preferably a solvent that is liquid at room temperature. While not wishing to be bound by any theory or model, it is believed that the use of a liquid solvent to form the first polyolefin solution makes it possible to conduct stretching of the gel-like sheet at a relatively high stretching magnification. In one form, the first membrane-forming solvent can be at least one of aliphatic, alicyclic or aromatic hydrocarbons such as nonane, decane, decalin, p-xylene, undecane, dodecane, liquid paraffin, etc.; mineral oil distillates having boiling points comparable to those of the above hydrocarbons; and phthalates liquid at room temperature such as dibutyl phthalate, dioctyl phthalate, etc. In one form where it is desired to obtain a multi-layer, gel-like sheet having a stable liquid solvent content, non-volatile liquid solvents such as liquid paraffin can be used, either alone or in combination with other solvents. Optionally, a solvent which is miscible with polyethylene in a melt blended state but solid at room temperature can be used, either alone or in combination with a liquid solvent. Such solid solvent can include, e.g., stearyl alcohol, ceryl alcohol, paraffin waxes, etc.

The viscosity of the liquid solvent is not a critical parameter. For example, the viscosity of the liquid solvent can range from about 30 cSt to about 500 cSt, or from about 30 cSt to about 200 cSt, at 25°C. Although it is not a critical parameter, when the viscosity at 25°C is less than about 30 cSt, it can be more difficult to prevent foaming the polyolefin solution, which can lead to difficulty in blending. On the other hand, when the viscosity is greater than about 500cSt, it can be more difficult to remove the liquid solvent from the multi-layer microporous polyolefin membrane.

In one form, the resins, etc., used to produce to the first polyolefin composition are melt-blended in, e.g., a double screw extruder or mixer. For example, a conventional extruder (or mixer or mixer-extruder) such as a double-screw extruder can be used to combine the resins, etc., to form the first polyolefin composition. The membrane-forming solvent can be added to the polyolefin composition (or alternatively to the resins used to produce the polyolefin composition) at any convenient point in the process. For example, in one form where the first polyolefin composition and the first membrane-forming solvent are melt-blended, the solvent can be added to the polyolefin composition (or its components) at any of (i) before starting melt-blending, (ii) during melt blending of the first polyolefin composition, or (iii) after melt-blending, e.g., by supplying the first membrane-forming solvent to the melt-blended or partially melt-blended polyolefin composition in a second extruder or extruder zone located downstream of the extruder zone used to melt-blend the polyolefin composition.

When melt-blending is used, the melt-blending temperature is not critical. For example, the melt-blending temperature of the first polyolefin solution can range from about 10°C higher than the melting point Tm₁ of the polyethylene in the first resin to about 120°C higher than Tm₁. For brevity, such a range can be represented as Tm₁ + 10°C to Tm₁ + 120°C. In a form where the polyethylene in the first resin has a melting point of about 130°C to about 140°C, the melt-blending temperature can range from about 140°C to about 250°C, or from about 170°C to about 240°C.

When an extruder such as a double-screw extruder is used for melt-blending, the screw parameters are not critical. For example, the screw can be characterized by a ratio L/D of the screw length L to the screw diameter D in the double-screw extruder, which can range, for example, from about 20 to about 100 or from about 35 to about 70. Although this parameter is not critical, when L/D is less than about 20, melt-blending can be more difficult, and when L/D is more than about 100, faster extruder speeds might be needed to prevent excessive residence time of the polyolefin solution in the double-screw extruder, which can lead to undesirable molecular weight degradation. Although it is not a critical parameter, the cylinder (or bore) of the double-screw extruder can have an inner diameter of in the range of about 40 mm to about 100 mm, for example.

The amount of the first polyolefin composition in the first polyolefin solution is not critical. In one form, the amount of first polyolefin composition in the first polyolefin solution can range from about 1 wt.% to about 75 wt.%, based on the weight of the polyolefin solution, for example from about 20 wt.% to about 70 wt.%.

The second polyolefin solution can be prepared by the same methods used to prepare the first polyolefin solution. For example, the second polyolefin solution can be prepared by melt-blending a second polyolefin composition with a second membrane-forming solvent.

Although it is not a critical parameter, the melt-blending conditions for the second polyolefin solution can differ from the conditions described for producing the first polyolefin composition in that the melt-blending temperature of the second polyolefin solution can range from about the melting point Tm₂ of the polyethylene in the second resin +10°C to Tm₂ +120°C.

The amount of the second polyolefin composition in the second polyolefin solution is not critical. In one form, the amount of second polyolefin composition in the second polyolefin solution can range from about 1 wt.% to about 75 wt.%, based on the weight of the second polyolefin solution, for example from about 20 wt.% to about 70 wt.%.

A monolayer extrusion die may be used to form an extrudate that can be laminated. In one form, extrusion dies, which can be adjacent or connected, are used to form the extrudates. The first and second sheet dies are connected to first and second extruders, respectively, where the first extruder contains the first polyolefin solution and the second extruder contains the second polyolefin solution. While not critical, lamination is generally easier to accomplish when the extruded first and second polyolefin solution are still at approximately the extrusion temperature.

In another form, first, second, and third dies are connected to first, second and third extruders, where the first and third dies contain the first polyolefin solutions, and the second die contains the second polyolefin solution. In this form, a laminated extrudate is formed constituting outer layers comprising the extruded first polyolefin solution and one intermediate comprising the extruded second polyolefin solution.

In yet another form, the first, second, and third dies are connected to first, second, and third extruders, where the second die contains the first polyolefin solution, and the first and third dies contain the second polyolefin solution. In this form, a laminated extrudate is formed constituting outer layers comprising the extruded second polyolefin solution and one intermediate comprising extruded first polyolefin solution.

The die gaps are generally not critical. For example, extrusion dies of the type disclosed herein can have a die gap of about 0.1 mm to about 5 mm. Die temperature and extruding speed are also non-critical parameters. For example, the dies can be heated to a die temperature ranging from about 140°C to about 250°C during extrusion. The extruding speed can range, for example, from about 0.2 m/minute to about 15 m/minute. The thickness of the layers of the layered extrudate can be independently selected. For example, the resultant sheet can have relatively thick skin or surface layers compared to the thickness of an intermediate layer of the layered extrudate.

A multi-layer, gel-like sheet can be obtained by cooling, for example. Cooling rate and cooling temperature are not particularly critical. For example, the multi-layer, gel-like sheet can be cooled at a cooling rate of at least about 50°C/minute until the temperature of the multi-layer, gel-like sheet (the cooling temperature) is approximately equal to the multi-layer, gel-like sheet's gelatin temperature (or lower). In one form, the extrudate is cooled to a temperature of about 25°C or lower in order to form the multi-layer gel-like sheet.

In one form, the first and second membrane-forming solvents are removed (or displaced) from the multi-layer gel-like sheet in order to form a solvent-removed gel-like sheet. A displacing (or "washing") solvent can be used to remove (wash away, or displace) the first and second membrane-forming solvents. The choice of washing solvent is not critical provided it is capable of dissolving or displacing at least a portion of the first and/or second membrane-forming solvent. Suitable washing solvents include, for instance, one or more of volatile solvents such as saturated hydrocarbons such as pentane, hexane, heptane, etc.; chlorinated hydrocarbons such as methylene chloride, carbon tetrachloride, etc.; ethers such as diethyl ether, dioxane, etc.; ketones such as methyl ethyl ketone, etc.; linear fluorocarbons such as trifluoroethane, C₆F_{14,} C₇F₁₆, etc.; cyclic hydrofluorocarbons such as C₅H₃F₇, etc.; hydrofluoroethers such as C₄F₉OCH₃, C₄F₉OC₂H₅, etc.; and perfluoroethers such as C₄F₉OCF₃, C₄F₉OC₂H₅, etc.

The method for removing the membrane-forming solvent is not critical, and any method capable of removing a significant amount of solvent can be used, including conventional solvent-removal methods. For example, the multi-layer, gel-like sheet can be washed by immersing the sheet in the washing solvent and/or showering the sheet with the washing solvent. The amount of washing solvent used is not critical, and will generally depend on the method selected for removal of the membrane-forming solvent. In one form, the membrane-forming solvent is removed from the gel-like sheet (e.g., by washing) until the amount of the remaining membrane-forming solvent in the multi-layer gel-like sheet becomes less than 1 wt.%, based on the weight of the gel-like sheet.

In one form, the solvent-removed multi-layer, gel-like sheet obtained by removing the membrane-forming solvent is dried in order to remove the washing solvent. Any method capable of removing the washing solvent can be used, including conventional methods such as heat-drying, wind-drying (moving air), etc. The temperature of the gel-like sheet during drying (i.e., drying temperature) is not critical. For example, the drying temperature can be equal to or lower than the crystal dispersion temperature Tcd. Tcd is the lower of the crystal dispersion temperature Tcd₁ of the polyethylene in the first resin and the crystal dispersion temperature Tcd₂ of the polyethylene in the second resin. For example, the drying temperature can be at least 5°C below the crystal dispersion temperature Tcd. The crystal dispersion temperature of the polyethylene in the first and second resins can be determined by measuring the temperature characteristics of the kinetic viscoelasticity of the polyethylene according to ASTM D 4065. In one form, the polyethylene in at least one of the first or second resins has a crystal dispersion temperature in the range of about 90°C to about100°C.

Although it is not critical, drying can be conducted until the amount of remaining washing solvent is about 5 wt.% or less on a dry basis, i.e., based on the weight of the dry multi-layer, microporous polyolefin membrane. In another form, drying is conducted until the amount of remaining washing solvent is about 3 wt.% or less on a dry basis.

Prior to the step for removing the membrane-forming solvents, the multi-layer, gel-like sheet can be stretched in order to obtain a stretched, multi-layer, gel-like sheet.

Neither the choice of stretching method nor the degree of stretching magnification is particularly critical. In one form, the stretching can be accomplished by one or more of tenter-stretching, roller-stretching, or inflation stretching (e.g., with air). Although the choice is not critical, the stretching can be conducted monoaxially (i.e., in either the machine or transverse direction) or biaxially (both the machine and transverse direction). In the case of biaxial stretching (also called biaxial orientation), the stretching can be simultaneous biaxial stretching, sequential stretching along one planar axis and then the other (e.g., first in the transverse direction and then in the machine direction), or multi-stage stretching (for instance, a combination of the simultaneous biaxial stretching and the sequential stretching).

The stretching magnification is not critical. In a form where monoaxial stretching is used, the linear stretching magnification can be, e.g., about 2 fold or more, or about 3 to about 30 fold. In a form where biaxial stretching is used, the linear stretching magnification can be, e.g., about 3 fold or more in any lateral direction. In another form, the linear magnification resulting from stretching is at least about 9 fold, or at least about 16 fold, or at least about 25 fold in area magnification.

The temperature of the multi-layer, gel-like sheet during stretching (namely the stretching temperature) is not critical. In one form, the temperature of the gel-like sheet during stretching can be about (Tm + 10°C) or lower, or optionally in a range that is higher than Tcd but lower than Tm, wherein Tm is the lesser of the melting point Tm₁ of the polyethylene in the first resin and the melting point Tm₂ of the polyethylene in the second resin.

The stretching when used generally makes it easier to produce a relatively high-mechanical strength multi-layer, microporous polyolefin membrane with a relatively large pore size. Such multi-layer, microporous membranes are believed to be particularly suitable for use as battery separators.

Optionally, stretching can be conducted in the presence of a temperature gradient in a thickness direction (i.e., a direction approximately perpendicular to the planar surface of the multi-layer, microporous polyolefin membrane) as described in JP 3,347,854 B2. In this case, it can be easier to produce a multi-layer, microporous polyolefin membrane with improved mechanical strength.

Although it is not required, the multi-layer, gel-like sheet can be treated with a hot solvent. When used, it is believed that the hot solvent treatment provides the fibrils (such as those formed by stretching the multi-layer gel-like sheet) with a relatively thick leaf-vein-like structure. The details of this method are described in WO 2000/20493.

In one form, the dried multi-layer, microporous membrane can be stretched, at least monoaxially. The stretching method selected is not critical, and conventional stretching methods can be used such as by a tenter method, etc. When the multi-layer gel-like sheet has been stretched as described above the stretching of the dry multi-layer, microporous polyolefin membrane can be called dry-stretching, re-stretching, or dry-orientation.

The temperature of the dry multi-layer, microporous membrane during stretching (the "dry stretching temperature") is not critical. In one form, the dry stretching temperature is approximately equal to the melting point Tm or lower, for example in the range of from about the crystal dispersion temperature Tcd to the about the melting point Tm. In one form, the dry stretching temperature ranges from about 90°C to about 135°C, or from about 95°C to about 130°C.

When dry-stretching is used, the stretching magnification is not critical. For example, the stretching magnification of the multi-layer, microporous membrane can range from about 1.1 fold to about 2.5 or about 1.1 to about 2.0 fold in at least one lateral (planar) direction.

In one form, the dried multi-layer, microporous membrane can be heat-treated. In one form, the heat treatment comprises heat-setting and/or annealing. When heat-setting is used, it can be conducted using conventional methods such as tenter methods and/or roller methods. Although it is not critical, the temperature of the dried multi-layer, microporous polyolefin membrane during heat-setting (i.e., the "heat-setting temperature") can range from the Tcd to about the Tm.

Annealing differs from heat-setting in that it is a heat treatment with no load applied to the multi-layer, microporous polyolefin membrane. The choice of annealing method is not critical, and it can be conducted, for example, by using a heating chamber with a belt conveyer or an air-floating-type heating chamber. Alternatively, the annealing can be conducted after the heat-setting with the tenter clips slackened. The temperature of the multi-layer, microporous polyolefin membrane during annealing can range from about the melting point Tm or lower, from about 60°C to (Tm - 10°C), or in a range of from about 60°C to (Tm - 5°C).

In one form, the multi-layer, microporous polyolefin membrane can be crosslinked (e.g., by ionizing radiation rays such as a-rays, (3-rays, 7-rays, electron beams, etc.) or can be subjected to a hydrophilic treatment (i.e., a treatment which makes the multi-layer, microporous polyolefin membrane more hydrophilic (e.g., a monomer-grafting treatment, a surfactant treatment, a corona-discharging treatment, etc.))).

In another form, a second method for producing the multi-layer, microporous polyolefin membrane comprises the steps of (1) combining (e.g., by melt-blending) a first polyolefin composition and a membrane-forming solvent to prepare a first polyolefin solution, (2) combining a second polyolefin composition and a second membrane-forming solvent to prepare a second polyolefin solution, (3) extruding the first polyolefin solution through at least one first die to form at least one first extrudate, (4) extruding the second polyolefin solution through at least one second die to form at least one second extrudate, (5) cooling first and second extrudates to form at least one first gel-like sheet and at least one second gel-like sheet, (6) laminating the first and second gel-like sheet to form a multi-layer, gel-like sheet, (7) removing the membrane-forming solvent from the resultant multi-layer, gel-like sheet to form a solvent-removed gel-like sheet, and (8) drying the solvent-removed gel-like sheet in order to form the multi-layer, microporous membrane. An optional stretching step (9), and an optional hot solvent treatment step (10), etc., can be conducted between steps (5) and (6) or between steps (6) and (7), if desired. After step (8), an optional step (11) of stretching a multi-layer, microporous membrane, an optional heat treatment step (12), an optional cross-linking step with ionizing radiations (13), and an optional hydrophilic treatment step (14), etc., can be conducted.

The main difference between the second production method and the production method described hereinabove is in the order of the steps for laminating and cooling. In the previously described production method, laminating the first and second polyolefin solutions is conducted before the cooling step. In this production method, the first and second polyolefin solutions are cooled before the laminating step.

Steps (1), (2), (7) and (8) in this production method can be the same as the steps of (1), (2), (5) and (6) in the previously described production method. For the extrusion of the first polyolefin solution through the first die, the conditions of step (3) of the first production method can be used for step (3) of the second production method. For the extrusion of the second solution through the second die, the conditions of step (4) in the first production method can be the same as the conditions of step (3) in the second production method. In one form, either the first or second polyolefin solution is extruded through a third die. In this way, a multi-layer laminate can be formed having two layers produced from the first polyolefin solution and a single layer produced from the second polyolefin solution, or vice versa.

Step (5) of this production method can be the same as step (4) in the previously described production method, except that in the second production method the first and second gel-like sheets are formed separately.

Step (6) of laminating the first and second gel-like sheets will now be explained in more detail. The choice of lamination method is not particularly critical, and conventional lamination methods such as heat-induced lamination can be used to laminate the multi-layer gel-like sheet. Other suitable lamination methods include, for example, heat-sealing, impulse-sealing, ultrasonic-bonding, etc., either alone or in combination. Heat-sealing can be conducted using, e.g., one or more pair of heated rollers where the gel-like sheets are conducted through at least one pair of the heated rollers. Although the heat-sealing temperature and pressure are not particularly critical, sufficient heating and pressure should be applied for a sufficient time to ensure that the gel-like sheets are appropriately bonded to provide a multi-layer, microporous membrane with relatively uniform properties and little tendency toward delamination. In one form, the heat-sealing temperature can be, for instance, about 90°C to about 135°C, or from about 90°C to about 115°C. In another form, the heat-sealing pressure can be from about 0.01MPa to about 50MPa.

As is the case in the first production method, the thickness of the layers formed from the first and second polyolefin solution (i.e., the layers comprising the first and second microporous layer materials) can be controlled by adjusting the thickness of the first and second gel-like sheets and by the amount of stretching (stretching magnification and dry stretching magnification), when one or more stretching steps are used. Optionally, the lamination step can be combined with a stretching step by passing the gel-like sheets through multi-stages of heated rollers.

In one form, the second production method forms a multi-layer, polyolefin gel-like sheet having at least three layers. For example, after cooling, two extruded first polyolefin solutions and one extruded second polyolefin solution to form the gel-like sheets, the multi-layer gel-like sheet can be laminated with outer layers comprising the extruded first polyolefin solution and an intermediate layer comprising the extruded second polyolefin solution. In another form, after cooling two extruded second polyolefin solutions and one extruded first polyolefin solution to form the gel-like sheets, the multi-layer gel-like sheet can be laminated with outer layers comprising the extruded second polyolefin solution and an intermediate layer comprising the extruded first polyolefin solution.

The stretching step (9) and the hot solvent treatment step (10) can be the same as the stretching step (7) and the hot solvent treatment step (8) as described for the first production method, except stretching step (9) and hot solvent treatment step (10) are conducted on the first and/or second gel-like sheets. The stretching temperatures of the first and second gel-like sheets are not critical. For example, the stretching temperatures of the first gel-like sheet can be, e.g., Tm₁+ 10°C or lower, or optionally about Tcd₁ or higher but lower than about Tm₁. The stretching temperature of the second gel-like sheet can be, e.g., Tm₂+ 10°C or lower, or optionally about Tcd₂ or higher but lower than about Tm₂.

In another form, the stretching temperature of the first gel-like sheet ranges from about the crystal dispersion temperature Tcd₁ of the polyethylene in the first resin to Tcd₁ +25°C, or from about Tcd₁ +10°C to Tcd₁ +25°C, or from about Tcd₁ +15°C to Tcd₁ +25°C. The stretching temperature of the second gel-like sheet ranges from the crystal dispersion temperature Tcd₂ of the polyethylene in the second resin to about Tcd₂ +25°C, or about Tcd₂ +10°C to Tcd₂ +25°C, or about Tcd₂ +15°C to Tcd₂ +25°C.

In yet another form, a third method for producing the multi-layer, microporous polyolefin membrane comprises the steps of (1) combining (e.g., by melt-blending) a first polyolefin composition and a membrane-forming solvent to prepare a first polyolefin solution, (2) combining a second polyolefin composition and a second membrane-forming solvent to prepare a second polyolefin solution, (3) extruding the first polyolefin solution through at least one first die to form at least one first extrudate, (4) extruding the second polyolefin solution through at least one second die to form at least one second extrudate, (5) cooling first and second extrudates to form at least one first gel-like sheet and at least one second gel-like sheet, (6) removing the first and second membrane-forming solvents from the first and second gel-like sheets to form solvent-removed first and second gel-like sheets, (7) drying the solvent-removed first and second gel-like sheets to form at least one first polyolefin membrane and at least one second polyolefin membrane, and (8) laminating the first and second microporous polyolefin membranes in order to form the multi-layer, microporous polyolefin membrane.

A stretching step (9) and a hot solvent treatment step (10), etc., can be conducted between steps (5) and (6), if desired. A stretching step (11) and a heat treatment step (12), etc., can be conducted between steps (7) and (8), if desired. After step (8), a step (13) of stretching a multi-layer, microporous membrane, a heat treatment step (14), a cross-linking step with ionizing radiations (15) and a hydrophilic treatment step (16), etc., can be conducted if desired.

Steps (1) and (2) in the third production method can be conducted under the same conditions as steps of (1) and (2) in the first production method. Steps (3), (4), and (5) in the third production method can be conducted under the same conditions as steps (3), (4), and (5) in the second method. Step (6) in the third production method can be conducted under the same conditions as step (5) in the first production method except for removing the membrane-forming solvent from the first and second gel-like sheets. Step (7) in the third production method can be conducted under the same conditions as step (6) in the first production method except that in the third production method the first and second solvent-removed gel-like sheets are dried separately. Step (8) in the third production method can be conducted under the same conditions as the step (6) in the second production method except for laminating the first and second polyolefin microporous membranes. The stretching step (9) and the hot solvent treatment step (10) in the third production method can be conducted under the same conditions as step (9) and (10) in the second production method. The stretching step (11) and the heat treatment step (12) in the third production method can be conducted under the same conditions as steps (9) and (10) in the first production method except that in the third production method the first and second polyolefin microporous membranes are stretched and/or heat treated.

In one form, in the stretching step (11) in the third production method, the stretching temperature of the first microporous polyolefin membrane can be about Tm₁ or lower, or optionally about Tcd₁ to about Tm₁, and the stretching temperature of the second microporous polyolefin membrane can be about Tm₂ or lower, or optionally about Tcd₂ to about Tm₂.

In one form, the heat treatment step (12) in the third production method can be HS and/or annealing. For example, in the heat treatment step (12) in the third production method, the heat-setting temperature of the first polyolefin microporous membranes can be about Tcd₁ to about Tm₁, or optionally about the dry stretching temperature +5°C, or optionally about the dry stretching temperature ±3°C. In one form, in the heat treatment step (12) in the third production method, the heat-setting temperature of the second microporous membrane can be about Tcd₂ to about Tm₂, or optionally the dry stretching temperature ±5°C, or optionally the dry stretching temperature ±3°C. When the HS is used, it can be conducted by, e.g., a tenter or roller method.

In one form, in the heat treatment step (12) in the third production method, the annealing temperature of the first microporous membrane can be about Tm₁ or lower, or optionally about 60°C to about (Tm₁ -10°C). In one form, in the heat treatment step (12) in the third production method, the annealing temperature of the second microporous membranes can be about Tm₂ or lower, or optionally about 60°C to about (Tm₂ -10°C).

The conditions in step (13), stretching a multi-layer, microporous membrane, a heat treatment step (14), a cross-linking step with ionizing radiations (15), and a hydrophilic treatment step (16) in the third production method can be the same as those for steps (9), (10), (11) and (12) in the first production method.

In still yet another form, a fourth production method for producing a multi-layer, microporous polyolefin membrane is provided. The method comprises the steps of (1) combining (e.g., by melt-blending) a first polyolefin composition and a membrane-forming solvent to prepare a first polyolefin solution, (2) combining a second polyolefin composition and a second membrane-forming solvent to prepare a second polyolefin solution, (3) coextruding the first and second polyolefin solutions through a die to form an extrudate, (4) cooling the extrudate to form a multi-layer, gel-like sheet, (5) removing the membrane-forming solvent from the multi-layer, gel-like sheet to form a solvent-removed gel-like sheet, and (6) drying the solvent-removed gel-like sheet in order to form the multi-layer, microporous polyolefin membrane. An optional stretching step (7), and an optional hot solvent treatment step (8), etc. can be conducted between steps (4) and (5), if desired. After step (6), an optional step (9) of stretching a multi-layer, microporous membrane, an optional heat treatment step (10), an optional cross-linking step with ionizing radiations (11), and an optional hydrophilic treatment step (12), etc., can be conducted if desired. The order of the optional steps is not critical.

In this form, the first and second polyolefin solutions are co-extruded using a coextrusion die, wherein a planar surface of a first extrudate layer formed from the first polyolefin solution is in contact with a planar surface of a second extrudate layer formed from the second polyolefin solution. A planar surface of the extrudate can be defined by a first vector in the machine direction (MD) of the extrudate and a second vector in the transverse direction (TD) of the extrudate.

In one form, the first extruder containing the first polyolefin solution is connected to a second die section for producing a first skin layer and a third die section for producing a second skin layer, and a second extruder containing the second polyolefin solution is connected to a first die section for producing a core layer. The resulting layered extrudate can be co-extruded to form a three-layer extrudate comprising a first and a third layer constituting skin or surface layers produced from the first polyolefin solution; and a second layer constituting a core or intermediate layer of the extrudate situated between and in planar contact with both surface layers, where the second layer is produced from the second polyolefin solution.

While the extrusion has been described in terms of producing two and three-layer extrudates, the extrusion step is not limited thereto. For example, a plurality of dies and/or die assemblies can be used to produce multi-layer extrudates having four or more layers using the principles of the extrusion dies and methods disclosed herein.

All patents, test procedures, and other documents cited herein, including priority documents, are fully incorporated by reference to the extent such disclosure is not inconsistent and for all jurisdictions in which such incorporation is permitted.

While the illustrative forms disclosed herein have been described with particularity, it will be understood that various other modifications will be apparent to and can be readily made by those skilled in the art without departing from the spirit and scope of the disclosure. Accordingly, it is not intended that the scope of the claims appended hereto be limited to the examples and descriptions set forth herein but rather that the claims be construed as encompassing all the features of patentable novelty which reside herein, including all features which would be treated as equivalents thereof by those skilled in the art to which this disclosure pertains.

When numerical lower limits and numerical upper limits are listed herein, ranges from any lower limit to any upper limit are contemplated.

The invention is further illustrated but not limited by the following embodiments.
1. In a system for producing an extrudate of thermoplastic material, the system including an extrusion die having a die outlet that includes a first die lip and a second die lip through which a polymer solution is extruded, and a chill roll for cooling the extrudate, an apparatus for protecting a cooled extrudate, the apparatus comprising:
   (a) a plate having a leading edge, a first end and a second end, said plate having a width that increases from said first end to said second end, along said leading edge; and
   (b) means for attaching said plate adjacent the first die lip of the extrusion die.
2. The apparatus of embodiment 1, wherein said plate is positioned above the chill roll and cooled extrudate.
3. The apparatus of embodiments 1 or 2, further comprising a guide for directing accumulated oil away from the cooled extrudate.
4. The apparatus of any of embodiments 1-3, wherein said guide for directing accumulated oil away from the cooled extrudate comprises an elongated member.
5. The apparatus of any of embodiments 1- 4, wherein said elongated member is of a length sufficient to direct accumulated oil to an oil collection device.
6. The apparatus of any of embodiments 1-5, wherein said elongated member is a chain.
7. The apparatus of any of embodiments 1-6, wherein said guide for directing accumulated oil away from the cooled extrudate further comprises a downwardly extending portion of said plate formed at said second end thereof.
8. The apparatus of any of embodiments 1- 7, wherein said elongated member is attached to said downwardly extending portion of said plate.
9. The apparatus of any of embodiments 1-8, wherein said means for attaching said plate adjacent the first die lip of the extrusion die comprises a first bracket fastened to said first end of said plate and a second bracket fastened to said second end of said plate.
10. The apparatus of embodiment 10, wherein said means for attaching said plate adjacent the first die lip of the extrusion die further comprises a longitudinal support member, said longitudinal support member fastened to said plate adjacent an edge opposing said leading edge.

## Claims

1. A process for producing an extrudate of thermoplastic material, comprising the following steps:
(a) combining a polyolefin composition and a solvent to prepare a polyolefin solution; and
(b) extruding the polyolefin solution through an extrusion die, the extrusion die comprising a slotted die outlet through which a melt stream of the thermoplastic material is extruded, the slotted die outlet comprising a first die lip and a second die lip;
(c) cooling the extrudate to form a cooled extrudate;
(d) protecting the cooled extrudate from condensate formed by step (c) through the use of an apparatus comprising: (i) a plate having a leading edge, a first end and a second end, the plate having a width that increases from the first end to the second end, along the leading edge; and (ii) means for attaching the plate adjacent to the first die lip of the extrusion die.

2. The process of claim 1, wherein the plate is positioned above the chill roll and cooled extrudate.

3. The process of claim 1, wherein the apparatus further comprises a guide for directing accumulated oil away from the cooled extrudate.

4. The process of claim 3, wherein the guide for directing accumulated oil away from the cooled extrudate comprises an elongated member.

5. The process of claim 4, wherein the elongated member is of a length sufficient to direct accumulated oil to an oil collection device.

6. The process of claim 4, wherein the elongated member is a chain.

7. The process of claim 4, wherein the guide for directing accumulated oil away from the cooled extrudate further comprises a downwardly extending portion of the plate formed at the second end thereof.

8. The process of claim 7, wherein the elongated member is attached to the downwardly extending portion of the plate.

9. The process of claim 1, wherein the means for attaching the plate adjacent the first die lip of the extrusion die comprises a first bracket fastened to the first end of the plate and a second bracket fastened to the second end of the plate.

10. The process of claim 9, wherein the means for attaching the plate adjacent the first die lip of the extrusion die further comprises a longitudinal support member, the longitudinal support member fastened to the plate adjacent an edge opposing the leading edge.
